# EUROPÄISCHE PATENTSCHRIFT

(11) **EP 2 196 415 B1**
(45) Veröffentlichungstag und Bekanntmachung des Hinweises auf die Patenterteilung: **09.01.2013**
(21) Anmeldenummer: 09175094.3
(22) Anmeldetag: 05.11.2009
(51) Int. Cl.: B65G 19/02, B65G 47/61

(54) **Belade-Station für in einer Hänge-Förder-Anlage transportierte Transport-Taschen**
Loading station for transport bags transported in a hanger conveyor
Station de chargement pour des sacs de transport transportés dans une installation de suspension et de transport

(30) Priorität: 11.12.2008 DE 102008061685
(43) Veröffentlichungstag der Anmeldung: 16.06.2010
(73) Patentinhaber: Dürkopp Fördertechnik GmbH, 33719 Bielefeld (DE)
(72) Erfinder: Janzen, Paul, 33619, Bielefeld (DE)
(74) Vertreter: Rau, Manfred

(56) Entgegenhaltungen:
- EP-A1- 1 258 439
- EP-A1- 1 420 105
- EP-A1- 1 690 811
- DE-A1-102004 018 569
- GB-A- 2 243 816

## Beschreibung

Um sogenannte Liege-Ware, wie beispielsweise Schuhe, verpackte Bekleidung und andere Pakete, in Hänge-Förder-Anlagen transportieren zu können, werden Transport-Taschen benutzt, die in der Regel Trage-Haken aufweisen, die in entsprechende Halte-Elemente der Hänge-Förder-Anlage gleichermaßen wie Bügel, auf denen Kleidungsstücke hängen, eingehängt werden können.

Derartige Hänge-Förder-Anlagen sind beispielsweise aus der EP 1 690 811 A1 bekannt. In derartigen Hänge-Förder-Anlagen werden in Schienen mittels angetriebener Ketten Halte-Elemente transportiert, die untere ösenartige Halteteile aufweisen, in die Bügel eingehängt werden. Auf derartigen Bügeln werden in der Regel Bekleidungsstücke, aber auch die erwähnten Transport-Taschen transportiert.

Es sind weiterhin Transport-Taschen bekannt, die aus flexiblem Material, beispielsweise einem Gewebe in Form einer Bahn, bestehen, wobei im oberen Bereich ein etwa rechteckiger, die beiden Enden der Gewebe-Bahn aufnehmender rahmenartiger Bügel vorgesehen ist. In die seitlich zur Förderrichtung offenen Taschen können Gegenstände eingelegt und transportiert werden, die nicht auf Bügel aufgehängt werden können. Hierbei handelt es sich um sogenannte Liege-Ware. Da derartige Transport-Taschen sich nur seitlich beladen lassen, ist eine mechanisierte Beladung mit den bekannten Mitteln nicht möglich.

Der Erfindung liegt die Aufgabe zugrunde, eine Belade-Station für Hänge-Förder-Anlagen zu schaffen, in der Transport-Taschen mechanisch mit Liege-Ware beschickt werden können.

Diese Aufgabe wird erfindungsgemäß durch die Merkmale des Anspruches 1 gelöst. Dadurch, dass die Transport-Taschen von der eigentlichen Hänge-Förder-Anlage vereinzelt nach unten in eine Belade-Position gefördert und dort an ihrem oberen Ende geöffnet werden, ist eine Beschickung, beispielsweise über eine Transport-Einrichtung für Liege-Ware, von oben in sehr einfacher Weise realisierbar.

Aus den Unteransprüchen ergeben sich zahlreiche vorteilhafte Ausgestaltungen.

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Hänge-Förder-Anlage mit einer Belade-Station nach der Erfindung in perspektivischer Darstellung mit Transport-Taschen,

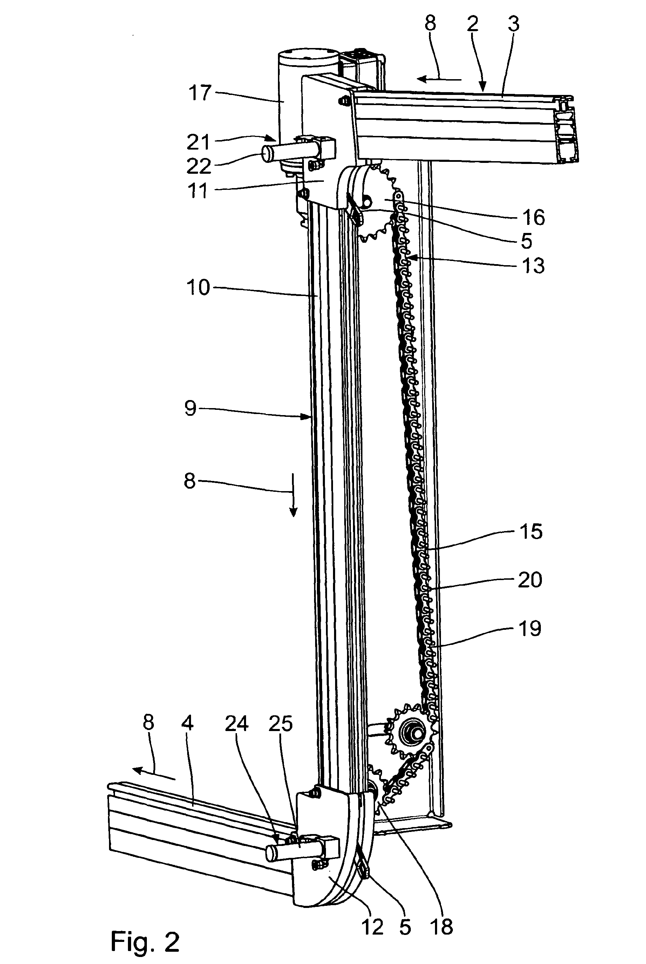

- Fig. 2: eine gegenüber Fig. 1 vergrößerte perspektivische Darstellung eines Senkrecht-Förderers der in Fig. 1 dargestellten Förder-Anlage ohne Transport-Taschen,

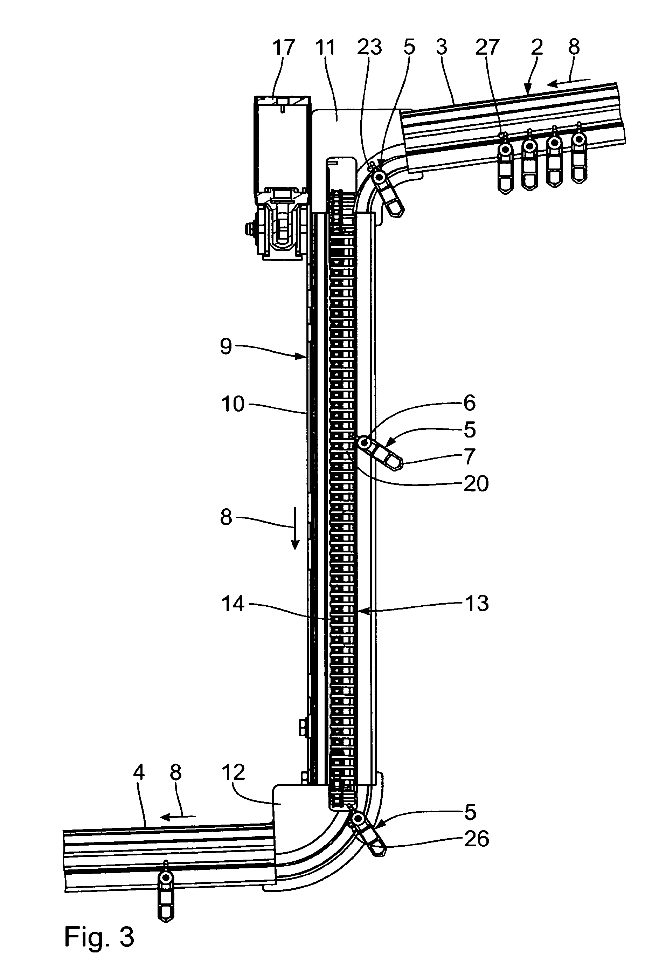

- Fig. 3: eine Ansicht des Senkrecht-Förderers nach Fig. 2 in aufgebrochener Darstellung ohne Transport-Taschen und

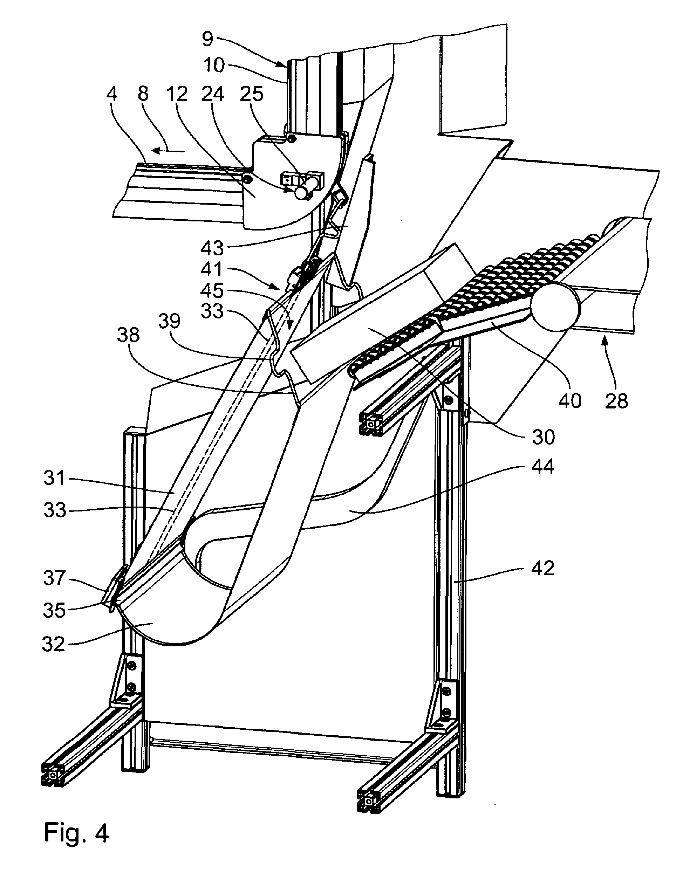

- Fig. 4: eine gegenüber Fig. 1 vergrößerte Teildarstellung einer Belade-Position der Förder-Anlage.

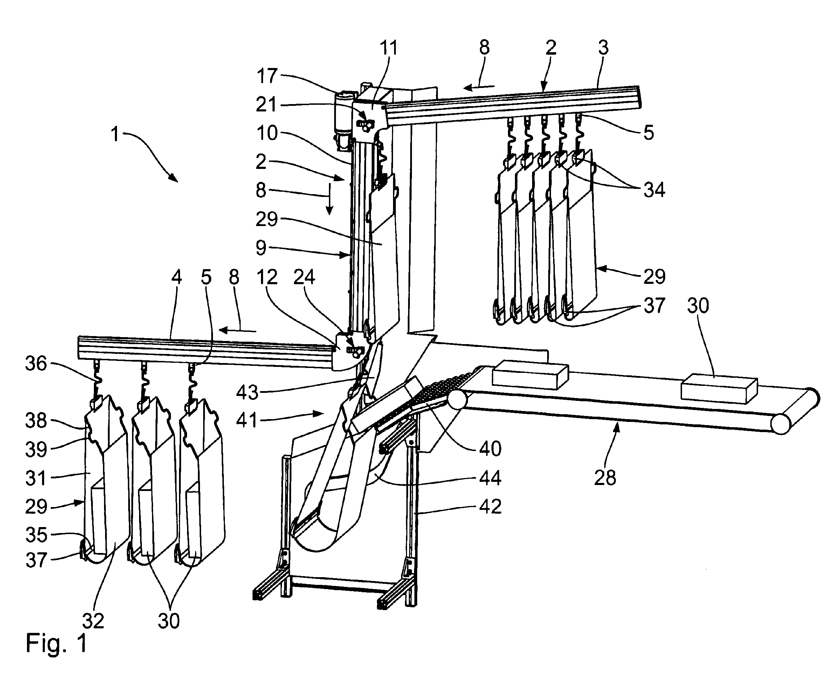

Die in Fig. 1 dargestellte Belade-Station 1 ist Teil einer Hänge-Förder-Anlage 2, von der nur eine in die Belade-Station 1 einmündende Zuführ-Schiene 3 und eine aus der Belade-Station 1 ausmündende Abführ-Schiene 4 angedeutet sind. In den als Hohlprofile ausgebildeten Schienen 3, 4 sind Halte-Elemente 5 mittels Laufrollen 6 gelagert, die ein ösenartiges, nach unten aus der jeweiligen Schiene 3 bzw. 4 herausragendes Halteteil 7 aufweisen. Da sowohl die Zuführ-Schiene 3 als auch die Abführ-Schiene 4 in Transport-Richtung 8 mit Gefälle verlegt sind, bedarf es keiner Antriebseinrichtung für die Halte-Elemente 5 in den Schienen 3, 4 im Bereich der Belade-Station 1. Im Übrigen sind die Schienen 3, 4, die Halte-Elemente 5 und auch entsprechende Antriebseinrichtungen für die Halte-Elemente 5 in der EP 1 690 811 A1 dargestellt und beschrieben, worauf insoweit verwiesen werden darf.

Ein wesentlicher Bestandteil der Belade-Station 1 ist ein Senkrecht-Förderer 9. Wesentlich hieran ist, dass er im Wesentlichen vertikal, also von oben nach unten fördert, wobei diese Förderung nicht exakt vertikal sein muss, sondern nur im Wesentlichen. Der Senkrecht-Förderer 9 weist eine Senkrecht-Transport-Schiene 10 auf, die das gleiche Profil aufweist wie die Schienen 3, 4. Die Zuführ-Schiene 3 mündet von oben über ein oberes Zuführ-Umlenk-Teil 11 in die Schiene 10. Die Schiene 10 ist an ihrem unteren Ende über ein Abführ-Umlenk-Teil 12 an die Abführ-Schiene 4 angeschlossen. Der Senkrecht-Förderer 9 weist weiterhin eine Transport-Kette 13 auf, deren in Transport-Richtung laufendes Transport-Trum 14 in der Schiene 10 nach unten läuft, während das nach oben laufende Rücklauf-Trum 15 außerhalb der Schiene 10 angeordnet ist. Der Antrieb der Transport-Kette 13 erfolgt über ein am oberen Zuführ-Umlenk-Teil 11 befindliches Antriebs-Ritzel 16, das mittels eines Elektro-Motors 17 antreibbar ist. Am unteren Abführ-Umlenk-Teil 12 ist ein Umlenk-Rad 18 für die Kette 13 gelagert. Die Transport-Kette 13 weist an jedem Ketten-Glied 19 einen vorspringenden Mitnahme-Bolzen 20 auf, so dass ein an die Transport-Kette 13 gelangtes Halte-Element 5 zwischen zwei derartigen Bolzen 20 mit der Geschwindigkeit der Transport-Kette 13 nach unten gefördert wird.

Am oberen Zuführ-Umlenk-Teil 11 ist eine Zuführ-Stopp-Einrichtung 21 vorgesehen, die aus einem pneumatisch beaufschlagbaren Kolben-Zylinder-Antrieb 22 besteht, die einen in den Weg eines Halte-Elementes 5 im Zuführ-Umlenk-Teil 11 schiebbaren oder aus diesem herausziehbaren Anschlag-Bolzen 23 aufweist. Eine entsprechende Belade-Stopp-Einrichtung 24 mit einem Kolben-Zylinder-Antrieb 25 und einem Anschlag-Bolzen 26 ist an dem unteren Abführ-Umlenk-Teil 12 angeordnet. Eine entsprechende Vor-Stopp-Einrichtung ist als VereinzelungsEinrichtung an der Zuführ-Schiene 3 vor dem oberen Zuführ-Umlenk-Teil 11 angebracht, wovon allerdings nur der Vor-Stopp-Anschlag-Bolzen 27 dargestellt ist.

Etwas unterhalb der Zuführ-Schiene 3 und - vom Horizontal-Niveau her - auch noch etwas unterhalb der Abführ-Schiene 4 endet ein Transport-Band 28 als Einrichtung zur Zuführung von in Transport-Taschen 29 aufzunehmende Liege-Waren 30. Derartige Transport-Taschen 29 bestehen aus einer in sich stabilen Trage-Wand 31 und einer Boden-Seiten-Wand 32, wobei die Wand 32 aus flexiblem Material besteht, beispielsweise einem stabilen Gewebe oder einer stabilen Folie. Die in sich steife Trage-Wand 31 weist einen Trage-Rahmen 33 auf, von dem nur ein oberer Trage-Körper 34 und eine untere Querstange 35 erkennbar sind. Am oberen Trage-Körper 34 ist ein Trage-Haken 36 angebracht. An den äußeren Enden der Querstange 35 sind Kupplungen angebracht, die im vorliegenden Fall in der Belade-Station 1 als Neigungs-Führungs-Anschläge 37 dienen. Im oberen Trage-Körper 34 ist ein im Wesentlichen rechteckig ausgebildeter Bügel 38 schwenkbar gelagert, an dessen dem oberen Trage-Körper 34 beabstandeter Längsseite die flexible Wand 32 angebracht ist. Der Bügel 38 weist an seinen die Wände 31 und 32 voneinander distanzierenden Querseiten seitliche Öffnungs-Führungs-Vorsprünge 39 auf. Aufbau und Funktion der Trage-Tasche 29 sind ausführlich in der DE 10 2008 026 720 A dargestellt und beschrieben, worauf verwiesen werden darf.

Wie bereits erwähnt, befindet sich vor einem als Rollenbahn ausgebildeten Abwurf-Ende 40 des Transport-Bandes 28 und unterhalb des unteren Abführ-Umlenk-Teils 12 eine Belade-Position 41 der Belade-Station 1. Sie weist an einem auch das Abwurf-Ende 40 und den Senkrecht-Förderer 9 tragenden Gestell 42 zwei obere Öffnungs-Führungs-Schienen 43 auf, von denen nur eine dargestellt ist, auf denen jeweils ein Öffnungs-FührungsVorsprung 39 des Bügels 38 geführt wird. Des Weiteren sind ebenfalls zwei untere Neigungs-Führungs-Schienen 44 vorgesehen, von denen ebenfalls nur eine dargestellt ist, auf denen jeweils ein Neigungs-Führungs-Anschlag 37 der Transport-Taschen 29 geführt wird.

### Die Arbeitsweise der Belade-Station 1 ist wie folgt:

In der oberen Zuführ-Schiene 3 sind eine Reihe von Halte-Elementen 5 hintereinander vorgesehen, die durch den Vor-Stopp-Anschlag-Bolzen 27 vor dem oberen Zuführ-Umlenk-Teil 11 gehalten werden. An jedem Halte-Element 5 hängt eine Transport-Tasche 29, deren Trage-Haken 36 in das entsprechende Halteteil 7 eingehängt ist. Wenn die Beladung einer Transport-Tasche 29 mit einer Liege-Ware 30 ansteht, dann wird der Vor-Stopp-Anschlag-Bolzen 27 kurzzeitig zurückgezogen, so dass ein Halte-Element 5 mit einer Trage-Tasche 29 bis vor den Anschlag-Bolzen 23 der Zuführ-Stopp-Einrichtung 21 gleiten kann. Wenn die Transport-Tasche 29 beladen werden soll, dann wird der Anschlag-Bolzen 23 durch entsprechende Betätigung des Kolben-Zylinder-Antriebs 22 der Zuführ-Stopp-Einrichtung 21 zurückgezogen, so dass das Halte-Element 5 mit der Transport-Tasche 29 unter Schwerkraft in die Senkrecht-Transport-Schiene 10 des Senkrecht-Förderers 9 einlaufen kann, wo sie gegen einen Mitnahme-Bolzen 20 der Transport-Kette 13 zur Anlage kommt und mit deren Geschwindigkeit nach unten gefahren wird.

Im unteren Abführ-Umlenk-Teil 12 kommt das Halte-Element 5 außer Eingriff mit der Transport-Kette und zur Anlage gegen den Anschlag-Bolzen 26 der Belade-Stopp-Einrichtung 24. Während der letzten Phase des Herabgleitens der Transport-Tasche in die geschilderte Lage am Anschlag-Bolzen 26 gleitet wiederum unter Schwerkraft ein Öffnungs-Führungs-Vorsprung 39 des Bügels 38 über die - bezogen auf die Transport-Richtung 8 - geneigte obere Öffnungs-Führungs-Schiene 43, wodurch der Bügel 38 derartig verschwenkt wird, dass die beiden Wände 31, 32 voneinander beanstandet werden. Der Bügel 38 bildet also eine zum Abwurf-Ende 40 hin offene Einwurf-Öffnung 45. Dadurch, dass die unteren Neigungs-Führungs-Anschläge 37 auf den unteren geneigten Neigungs-Führungs-Schienen 44 gleiten, wird die Trage-Wand 31 gegenüber der Vertikalen nach unten und in Transport-Richtung 8 schräg gestellt, so dass die Boden-Seiten-Wand 32 sich ebenfalls unter der Schwerkraft und aufgrund der erwähnten Öffnung des Bügels 38 von der Trage-Wand 31 entfernt, so dass die beiden Wände 31, 32 voneinander beanstandet sind. Die Transport-Tasche 29 ist also insgesamt geöffnet.

Die Schrägstellung der Transport-Taschen 29 muss nicht für jeden EinsatzFall zwingend sein. In einem solchen Fall können die Anschläge 37 und die Schienen 44 entfallen.

Wenn eine Ware 30 in die geöffnete Transport-Tasche 29 abgeworfen ist, wird der Anschlag-Bolzen 26 durch entsprechende Beaufschlagung des Kolben-Zylinder-Antriebs 25 zurückgezogen, so dass das Halte-Element 5 zusammen mit der beladenen Transport-Tasche 29 unter Schwerkraft in die Abführ-Schiene 4 gleitet und dort wiederum unter Schwerkraft abtransportiert wird. Die Zuführung der nächsten Transport-Tasche 29 kann dann in gleicher Weise vonstatten gehen.

## Patentansprüche

1. Belade-Station (1) für in einer Hänge-Förder-Anlage (2) transportierte Transport-Taschen (29),
- mit einer oberen Zuführ-Schiene (3) für die Transport-Taschen (29),
- mit einem sich an die Zuführ-Schiene (3) anschließenden Senkrecht-Förderer (9) zum Zuführen der Transport-Taschen (29) in eine untere Belade-Position (41),
- mit einer Einrichtung zum Öffnen der Transport-Taschen (29) in der Belade-Position (41) und
- mit einer sich an den Senkrecht-Förderer (9) anschließenden unteren Abführ-Schiene (4) zum Abführen der Transport-Taschen (29) aus der Belade-Position (41).

2. Belade-Station (1) nach Anspruch 1, **dadurch gekennzeichnet,**
**dass** die obere Zuführ-Schiene (3) mittels eines Zuführ-Umlenk-Teils (11) mit dem Senkrecht-Förderer (9) verbunden ist.

3. Belade-Station (1) nach Anspruch 1 oder 2, **dadurch gekennzeichnet,**
**dass** der Senkrecht-Förderer (9) mittels eines Abführ-Umlenk-Teils (12) mit der unteren Abführ-Schiene (4) verbunden ist.

4. Belade-Station (1) nach einem der Ansprüche 1 bis 3, **dadurch gekennzeichnet,**
**dass** der Senkrecht-Förderer (9) eine Senkrecht-Transport-Schiene (10) und eine antreibbare Transport-Kette (13) aufweist, deren nach unten bewegbares Transport-Trum (14) in der Senkrecht-Transport-Schiene (10) angeordnet ist und die mit Mitnehmern (20) zum Halten der Transport-Taschen (29) versehen ist.

5. Belade-Station (1) nach einem der Ansprüche 1 bis 4, **dadurch gekennzeichnet,**
**dass** vor der Transport-Kette (13) am Übergang von der oberen Zuführ-Schiene (3) zum Senkrecht-Förderer (9) eine Zuführ-Stopp-Einrichtung (21) vorgesehen ist.

6. Belade-Station (1) nach einem der Ansprüche 1 bis 5, **dadurch gekennzeichnet,**
**dass** hinter der Transport-Kette (13) am Übergang vom Senkrecht-Förderer (9) zur Abführ-Schiene (4) eine Belade-Stopp-Einrichtung (24) vorgesehen ist.

7. Belade-Station (1) nach einem der Ansprüche 1 bis 6, **dadurch gekennzeichnet,**
**dass** in der Belade-Position (41) mindestens eine Öffnungs-FührungsSchiene (43) zum Öffnen der Transport-Taschen (29) vorgesehen ist.

8. Belade-Station (1) nach einem der Ansprüche 1 bis 7, **dadurch gekennzeichnet,**
**dass** an der Belade-Station (41) mindestens eine Neigungs-FührungsSchiene (44) zum Schrägstellen der Transport-Taschen (29) vorgesehen ist.

9. Belade-Station (1) nach einem der Ansprüche 1 bis 8, **dadurch gekennzeichnet,**
**dass** an der Belade-Position (41) eine Transport-Einrichtung (28) für Liege-Ware (30) einmündet.

## Claims

1. Loading station (1) for transport bags (29) transported in an overhead conveyor system (2), comprising
- an upper supply rail (3) for the transport bags (29);
- a vertical conveyor (9) which adjoins the supply rail (3) for supplying the transport bags (29) in a lower loading position (41);
- a device for opening the transport bags (29) in the loading position (41); and
- a lower discharge rail (4) which adjoins the vertical conveyor (9) for moving the transport bags (29) away from the loading position (41).

2. Loading station according to claim 1, **characterized in that** the upper supply rail (3) is connected with the vertical conveyor (9) by means of a supply deflection part (11).

3. Loading station according to claim 1 or 2, **characterized in that** the vertical conveyor (9) is connected with the lower discharge rail (4) by means of a discharge deflection part (12).

4. Loading station according to one of claims 1 to 3, **characterized in that** the vertical conveyor (9) comprises a vertical transport rail (10) and a drivable transport chain (13) which is provided with entrainers (20) for holding the transport bags (29), with the transport strand (14) of the transport chain (13), which is movable downwards, being arranged in the vertical transport rail (10).

5. Loading station (1) according to one of claims 1 to 4, **characterized in that** in front of the transport chain (13), a supply stopping device (21) is provided at the transition between the upper supply rail (3) and the vertical conveyor (9).

6. Loading station (1) according to one of claims 1 to 5, **characterized in that** behind the transport rail (13), a loading stopping device (24) is provided at the transition between the vertical conveyor (9) and the discharge rail (4).

7. Loading station (1) according to one of claims 1 to 6, **characterized in that** in the loading position (41), at least one opening guide rail (43) is provided for opening the transport bags (29).

8. Loading station (1) according to one of claims 1 to 7, **characterized in that** the loading station (1) is provided with at least one inclination guide rail (44) for inclining the transport bags (29).

9. Loading station (1) according to one of claims 1 to 8, **characterized in that** a transport device (28) for flat goods (30) leads into the loading position (41).

## Revendications

1. Station de chargement (1) pour des sacs de transport (29) transportés dans une installation de suspension et de transport (2),
- comprenant un rail d'amenée supérieur (3) pour les sacs de transport (29),
- comprenant un transporteur vertical (9), attenant au rail d'amenée (3), pour mener les sacs de transport (29) dans une position de chargement (41) et
- comprenant un dispositif pour l'ouverture des sacs de transport (29) dans la position de chargement (41) et
- comprenant un rail d'évacuation inférieur (4), attenant au transporteur vertical (9), pour l'évacuation des sacs de transport (29) à partir de la position de chargement (41).

2. Station de chargement (1) selon la revendication 1 **caractérisée en ce**
**que** le rail d'amenée supérieur (3) est relié au transporteur vertical (9) au moyen d'une pièce de renvoi d'amenée (11).

3. Station de chargement (1) selon les revendications 1 ou 2 **caractérisée en ce**
**que** le transporteur vertical (9) est relié avec le rail d'évacuation inférieur (4) au moyen d'une pièce de renvoi d'évacuation (12).

4. Station de chargement (1) selon l'une des revendications de 1 à 3 **caractérisée en ce**
**que** le transporteur vertical (9) présente un rail de transport vertical (10) et une chaîne de transport (13), pouvant être entraînée, dont la partie de transport (14) pouvant se déplacer vers le bas est disposée dans le rail de transport vertical (10) et est munie de moyens d'entraînement (20) pour le maintien des sacs de transport (29).

5. Station de chargement (1) selon l'une des revendications de 1 à 4 **caractérisée en ce**
**qu'**un dispositif d'arrêt de l'amenée (21) est prévu avant la chaîne de transport (13) au passage du rail d'amenée supérieur (3) vers le transporteur vertical (9).

6. Station de chargement (1) selon l'une des revendications de 1 à 5 **caractérisée en ce**
**qu'**un dispositif d'arrêt de chargement (24) est prévu après la chaîne de transport (13) au passage du transporteur vertical (9) vers le rail d'évacuation (4).

7. Station de chargement (1) selon l'une des revendications de 1 à 6 **caractérisée en ce**
**qu'**au moins un rail de transport d'ouverture (43) est prévu dans la position de chargement (41) pour l'ouverture des sacs de transport (29.

8. Station de chargement (1) selon l'une des revendications de 1 à 7 **caractérisée en ce**
**qu'**au moins un rail de transport en inclinaison (44) est prévu dans la station de chargement (41) pour l'inclinaison des sacs de transport (29).

9. Station de chargement (1) selon l'une des revendications de 1 à 8 **caractérisée en ce**
**qu'**un dispositif de transport (28) pour une marchandise à l'état couché (30) débouche au niveau de la position de chargement (41).
